# EUROPEAN PATENT SPECIFICATION

(11) **EP 1 441 183 B1**
(45) Date of publication and mention of the grant of the patent: **05.04.2006**
(21) Application number: 04425026.4
(22) Date of filing: 19.01.2004
(51) Int. Cl.: F24F 3/06, F24F 11/00, F24F 5/00

(54) **Electronic hydraulic device for heat pumps**
Elektronisch-hydraulische Vorrichtung für Wärmepumpen
Dispositif éléctronique-hydrolique pour pompe à chaleur

(30) Priority: 27.01.2003 IT MC20030006
(43) Date of publication of application: 28.07.2004
(73) Proprietor: TECNOCASA S.R.L., 60025 Loreto (AN) (IT)
(72) Inventor: Zallocco, Sergio, 62010 Montelupone MC (IT)
(74) Representative: Baldi, Claudio

(56) References cited:
- EP-A- 0 468 318
- EP-A- 0 508 245
- DE-U- 29 823 175
- US-A- 3 627 031

## Description

The present patent application refers to an electronic hydraulic device for heat pumps that allows for using heat pumps with air conditioning systems that use water as vector fluid for the transfer of heat to the air to be conditioned.

As it is known, unlike air conditioning systems, heat pumps have a double capability, since they can be used to heat and cool a room.

The operation of heat pumps is similar to the operation of standard refrigerators and is based on the thermodynamic cycle of the refrigerant liquid subjected to evaporation, compression, condensation and expansion.

The inverse operation cycle allows for using the same refrigerant liquid both to heat and cool the room.

There are currently two types of heat pumps that differ in the use of an intermediate vector fluid between the refrigerant liquid and the air of the room to be conditioned. In direct-expansion heat pumps the refrigerant liquid transfers the heat directly to the air of the room to be conditioned. In indirect-expansion heat pumps the refrigerant liquid transfers the heat to water and water in turn transfers it to the air.

For both types of heat pumps, variable refrigerant volume (VRV) systems are particularly interesting. By adjusting the number of revolutions according to the load required by the user, the engine adjusts the maximum volume of refrigerant liquid into the compressor, thus allowing for partial load efficiency of the heat pump.

In the last few years special interest has been aroused by indirect-expansion heat pumps, thanks to the possibility of using them in existing air conditioning systems to typically heat the air and additionally to cool it.

This is obtained without modifications to the water distribution system or radiators, by simply replacing the traditional boiler for hot water production with an indirect-expansion heat pump.

For this reason different manufacturers produce two versions of the same model of heat pump, that is to say the direct-expansion (designed for conventional operation only) and indirect-expansion version. Due to the complexity and evolution of indirect-expansion heat pumps, they can be integrated water heating systems as illustrated above.

However, from the functional viewpoint the two versions of heat pumps (that is to say direct and indirect-expansion heat pumps) are not interchangeable. For this reason, manufacturers are forced to produce two versions with different production lines and higher production costs. On the other hand, customers are forced to choose between the two versions and this choice imposes some limitations on the type of heating system to be installed.

The purpose of the present invention is to provide an electronic hydraulic device that, when associated as accessory to a conventional direct-expansion heat pump, allows to use the pump according to the typical operation principle of indirect-expansion heat pumps. This is to say that, thanks to such an accessory, direct-expansion heat pumps can be used for the first time to power air conditioning systems that use water as vector fluid for the transfer of heat.

Thanks to the new device of the invention, manufacturers will only need to produce direct-expansion heat pumps (that is to say only one version for each model), with the possibility of using them according to the typical operation principle of indirect-expansion heat pumps.

Being an external accessory separated from the structure of the direct-expansion heat pump, the device of the invention does not alter the operation mode of the heat pump, with the possibility of powering systems that use a refrigerant (or cooling liquid) as vector fluid for the transfer of heat.

In this way the same direct-expansion heat pump provided with the accessory of the invention can be simultaneously used to power a water system and a refrigerant liquid system, by simply connecting the refrigerant liquid system to the heat pump directly and the water system to the heat pump with the accessory of the invention.

The advantages resulting from the device of the invention include higher versatility in the installation of heat pumps, being it possible to use them in existing water systems without making any modification and to place the device at a considerable distance from the external unit of the heat pump.

For more clarity the description of the present invention continues with reference to the enclosed drawings, which are intended for purposes of illustration and not in a limiting sense, whereby:
- Fig. 1 is a diagrammatic view of the hydraulic device of the invention;
- Fig. 2 is a view of the device connected to a direct-expansion heat pump of the type using an intemal-combustion engine to operate the compressor;
- Fig. 3 is a diagrammatic view of the simplified electronic board of the heat pump with the hydraulic device of the invention;
- Fig. 4 is a view of the electric circuit of the hydraulic device of the invention connected to the electronic board of Fig. 3;
- Fig. 5 is an enlarged view of the electronic board of Fig. 4 with detailed specifications;
- Fig. 6 is an additional detailed view of the electronic board of Fig. 5;
- Figs. 7A and 7B show the circulation direction of the cooling liquid inside the hydraulic device of the invention;
- Fig. 8 is a view of a mixed air conditioning system obtained by using the hydraulic device of the invention in association with a direct-expansion heat pump.
   With reference to Figs. 1 and 2 the hydraulic device of the invention (100) comprises the following components;
- one water circulation pump (101);
- one thermostatic valve (101) with internal and external equalisation;
- a capillary (103) with by-pass system with two feed check valves (104, 105);
- one plate heat exchanger (106);
- one water storage tank (107);
- one expansion vessel (108);
- one differential pressostat PD (109);
- one manometer (110);
- one water recovery unit (111);
- one TH thermostat (112);

The thermostatic valve (102) works when the heat pump (200) connected to the device of the invention (100) operates in summer mode; on the other hand, the capillary (103) operates - in replacement of a conventional thermostatic valve - when the heat pump operates in winter mode, that is to say when the exchanger (106) operates as condenser.

The use of the capillary (103) allows for splitting the hydraulic device of the invention, with the possibility of installing it at a certain distance from the heat pump. This increases installation flexibility, not only in terms of technical issues, such as overall volume, but also in terms of aesthetics.

It must be noted that in addition to the circuit (C) used by the cooling liquid to reach the exchanger (106), the device (100) of the invention is also provided with two separate independent circuits, one primary (P) and one secondary (S) circuit, thus making its use possible regardless of the hydraulic circuit dimensioning in the room to be conditioned.

The device (100) of the invention is provided with its own circulation pump (101) and the external unit of the heat pump (200) transfers the heat only to the primary circuit (P) of the same device.

This results in the following advantages: scale economy, since the structure of the device of the invention remains unchanged regardless of the characteristics of the system in which it is used, thus allowing for mass production.

Moreover, a special solution has been adopted to improve the exchange of heat inside the exchanger (106), thus allowing the transfer of liquids in counter-current flow both in summer and winter operation mode.

In actual fact, this objective has been quite difficult to obtain, since the change in the operation mode from the summer to winter or vice versa involves the inversion of the cooling liquid direction inside the heat pump.

Without the solution adopted for the device of the invention, the heat pump would work in counter-current flow in winter mode and in parallel flow in summer mode or vice versa.

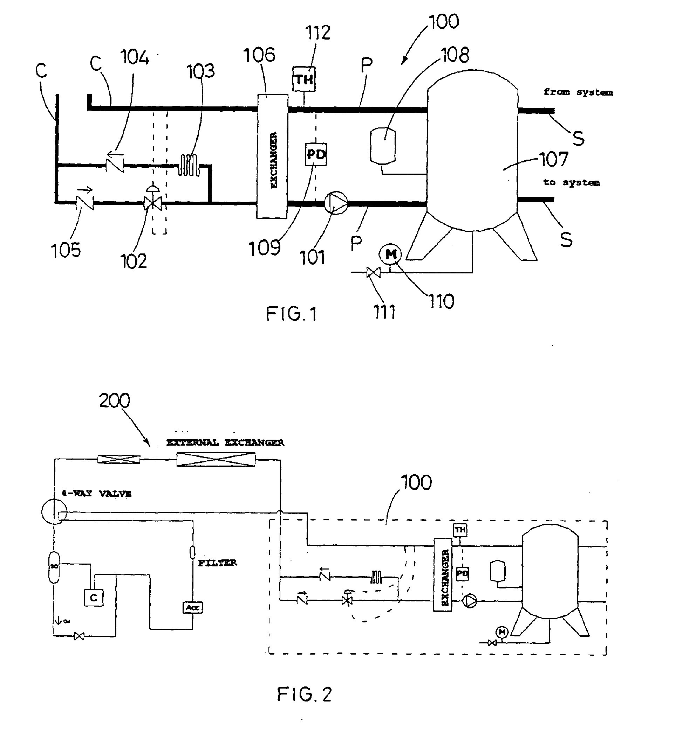

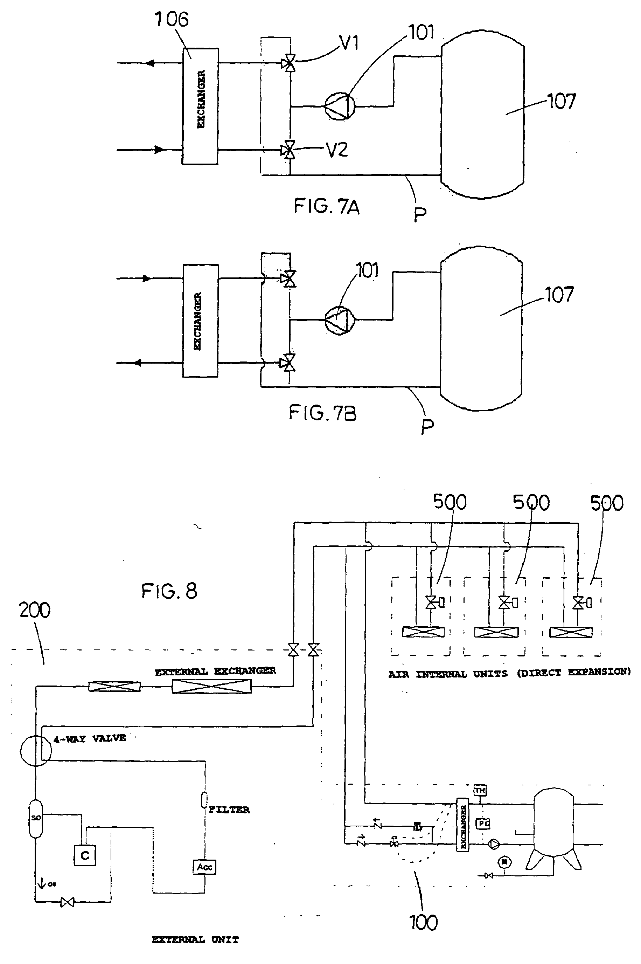

By comparing Figs. 7A and 7B to Fig. 1 (which shows the basic version of the device of the invention) it appears evident that the solution consists in the insertion of three additional T-shaped joints in the primary circuit (P) of the device (100) of the invention, with two joints provided with motorised three-way valves (V1, V2).

This solution has been devised in order to invert the water flow inside the exchanger (106), constantly ensuring operation in counter-current flow with respect to the cooling liquid both in summer and winter mode.

The two valves (V1, V2) are selectively controlled with the switch of the device (100) used to select the desired operation mode between winter and summer mode.

It has also been necessary to modify the conventional electronic board used in the direct-expansion heat pump (200) in order to allow for communication between the heat pump (200) and the hydraulic device of the invention (100) as a conventional direct-expansion exchanger with cooling liquid.

It must be noted that the modified electronic board of the invention is based on the conventional board normally used by direct-expansion exchangers in connection with heat pumps.

Thanks to the modified electronic board, the heat pump (200) automatically adjusts its operation as if it was working with a direct-expansion exchanger in such a was as to constantly deliver the maximum power. The control and adjustment system of the other parts of the heat pump (200) have remained unchanged.

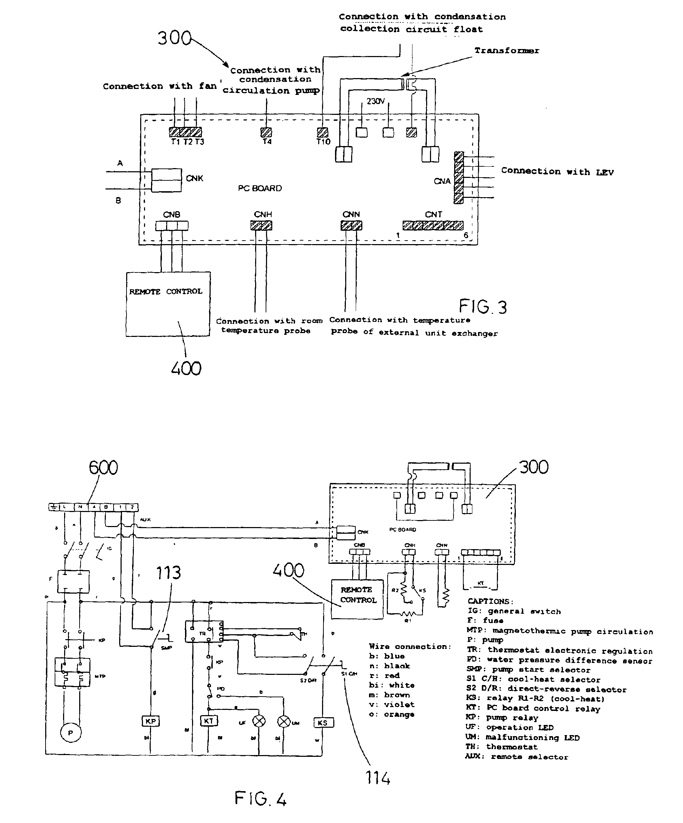

Fig. 3 shows an electronic board (300) of the type conventionally used in direct-expansion heat pumps, with modified connections (that is to say connections that have been either disconnected or modified) shown with a broken line.

For a better description of the logical principles that have guided the modifications, reference must be made to the conventional operation mode of direct-expansion heat pumps.

To date, direct-expansion heat pumps are operated by means of a remote control used to select an "automatic" operation mode. According to the selected mode, the heat pump is automatically started as soon as it detects a difference in temperature between the temperature value set on the remote control and the temperature value measured in the room, thus automatically setting the operation mode according to the values provided by temperature sensors.

For instance, if the difference in temperature is positive and higher by approximately 3°C (i.e. the temperature probe of the heat pump shows 27°C while the room temperature is set at 22°C), the heat pump starts to cool the air; on the contrary, if the difference in temperature is negative (< 3°C) the heat pump is started in winter mode to heat the room.

On the contrary, according to the invention, the heat pump (that operates in indirect-expansion mode) is controlled with reference to the temperature of the vector liquid (water), which is considerably different from the room temperature (generally ranging from 15 to 35°C).

Water temperature must range between 7 and 12°C in cooling mode and between 42 and 47°C in heating mode.

In view of the above, the purpose of the modifications to the board (300) is that the heat pump ignores the fact that it is powering a "cooling liquid-water" exchanger, and not a "cooling liquid-air" exchanger, as originally designed.

This artifice has avoided the need to modify the complex electronics of the external unit of the heat pump.

With reference to fig. 4, the electronic hydraulic device of the invention (100), as described in the preceding pages, is provided with a general power switch IG that powers the electric parts of the device (such as thermostat, board, etc.).

The device (100) is also provided with a second switch SMP (113) used to activate the water circulation pump (101), which becomes the on-switch of the entire system and replaces the on/off switch of conventional remote controls.

The switch SMP (113) directly applied to the device (100) can also be actuated from remote by means of the auxiliary contacts AUX (1, 2) of the terminal block (600) on the device (100), as shown in Fig. 4.

When the switch SMP is on, the switching on of the general switch IG powers the electronic board (300) and starts the circulation pump (101), as long as the start is enabled by the differential pressostat PD (109), the start relay of the circulation pump KP and the thermostat TH (112); in this case the operation indicator light UF goes on.

Conversely, if the start is not enabled by the differential pressostat PD, the malfunctioning indicator light UM goes on and the heat pump (200) does not start.

The device of the invention (100) is also provided with a summer/winter selector S1 C/H (114), which ensures that the thermostat TH (112) is automatically set as desired.

In actual fact, the logic of selector S1 C/H (114) is not univocal: when the heat pump (200) is in heating mode, the heat pump (200) is started when the thermostat TH (112) detects a negative ΔT higher than the set value by a certain value, preferably 2°C (for instance, if the thermostat is set at 42°C, the heat pump (200) is started only if the temperature of the return water is lower than 39°C).

If the heat pump (200) is in cooling mode, the heat pump (200) is started when the thermostat TH (112) detects a positive ΔT higher by 2°C.

In order to avoid modifications to the electronic apparatus of the heat pump (200) associated with the device of the invention (100), a conventional remote control is used, which is suitably modified and then placed in a location that cannot be accessed by the user.

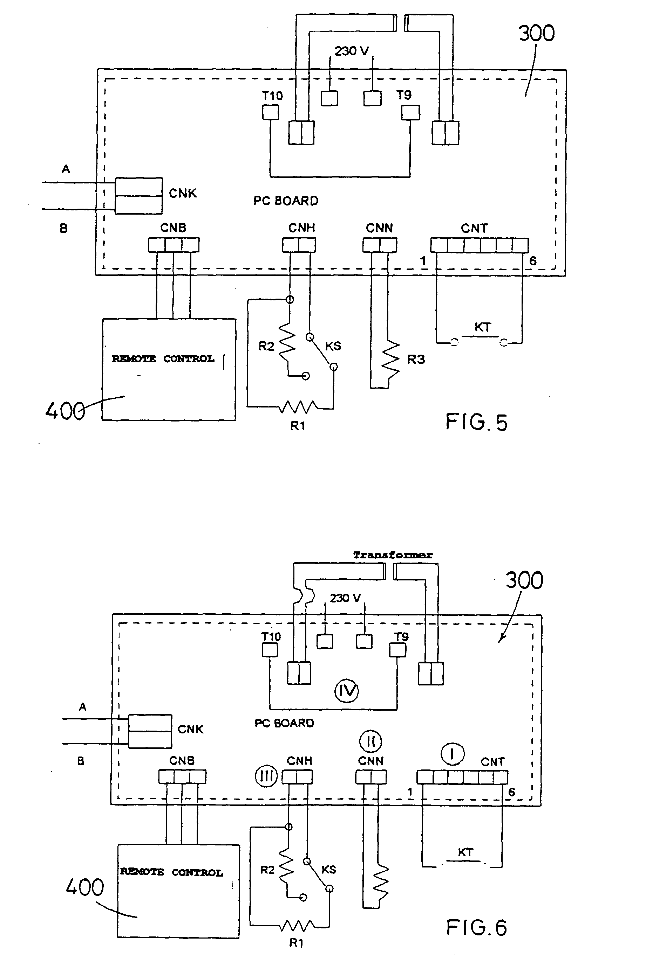

With reference to Fig. 5, the first modification to the electronic board (300) is the connection CNT of the switch-on remote contact by means of relay KT.

This contact allows for starting the device of the invention (100) also from remote.

However, it allows for starting the heat pump (200) according to the settings of the remote control (400) and this is the reason why this component was impossible to eliminate (it being also useful to investigate possible malfunctioning situations during maintenance).

It is set in the "auto" mode and automatically sets the operation mode of the heat pump (200), with the approval of the general switch IG and the on/off switch SMP (113) of the circulation pump (101) after carrying out suitable checks on adjustment and safety parts.

For this reason the electronic board (300) has been modified in order for the heat pump (200) to detect a fictitious temperature set on the electronic board (300) and not the temperature of the room to be conditioned.

In practice, ports CNN and CNH of the electronic board (300) have been disconnected from the temperature probes of the internal air units and replaced with circuits provided with resistances that simulate a fictitious temperature.

The relay KS is actuated with the summer/winter selector S1 C/H (114) of the hydraulic device of the invention (100) and ensures that the heat pump (200) detects the temperature set by R1 (in heating mode) or R2 (in cooling mode).

Resistance R1 simulates a constant temperature, preferably 14°C, and R2 preferably simulates a constant temperature of 35°C; these temperatures can of course have a different value, without altering the operation principles.

If the temperature set on the remote control (400) is 23°C, the heat pump (200) is started in heating or cooling mode depending on whether it detects the temperature set on R1 or R2.

This means that the summer/winter selector S1 C/H (114) does not actuate the four-way valve of the heat pump (200), that is to say the valve designed to invert the cooling liquid flow. It simply selects the fictitious temperatures, leaving the choice of the operation mode to the heat pump (200).

Assuming that the resistance simulated temperatures are fixed, the adjustment of the heat pump (200) has been mostly avoided, since the heat pump (200) modulates power according to the differences in temperature.

This significant advantage is one of the main purposes of this invention, which provides for on/off operation of the heat pump (200), with constant efficiency (at maximum permitted levels) without any slowdown and modulation in the number of engine revolutions.

In any case, the modulation of the heat pump (200) has not been ruled out, since the other controls remain unchanged, such as working pressure or cooling liquid temperature controls.

Additionally, the connection with port CNN has been modified on the electric board (300).

In actual fact, in the conventional operation mode of direct-expansion heat pumps, port CNN is connected to a temperature probe contained in the "cooling liquid-air" exchanger and is therefore used to measure the undercooling or overheating temperature close to condensation or evaporation temperatures.

In view of the impossibility of using a similar probe in the hydraulic device (100) of the invention, a fictitious fixed temperature has been imposed by means of a resistive circuit R3, setting the temperature value at 35°C.

An additional minor modification to the electronic board (300) refers to the inhibition of the on/off switch of the remote control (400) that, as mentioned earlier, is not user-accessible and doesn't need to be used, once it has been suitably set.

Other modifications have been made to disconnect the contacts of the electronic board (300) for the internal direct-expansion unit, which have become useless in view of the adoption of the hydraulic device of the invention (100) that has modified the operation modes of the heat pump (200) as illustrated above.

For instance, the contacts with the internal unit fan, the contacts with the electronic expansion valve and the contacts with the condensation collection circuit pump have been disconnected.

Another modification affects the contact with the float contained in a small condensation storage tank: the tank is provided with an overflow float and, if condensation reaches an excessive level, the contact deactivates the connection by means of a relay and blocks the heat pump (200). Contacts T9 and T10 have been therefore bridged to simulate the float permanent "on" status, as shown in Fig. 5.

With particular reference to Fig. 6, the main modifications to the electronic board (300) that allows for communication between the different units are as follows:
**(I)** connection of remote control port CNT
**(II)** connection CNN with resistive circuit for the simulation of the condensation or evaporation temperature of the cooling liquid
**(II)** connection CNN with resistive circuit for the simulation of the air temperature in the room
**(IV)** connection bridge between contacts T9 and T10 to simulate the permanent "on" status of the floater of the condensation collection circuit
**(V)** disconnection of contacts T1, T2, T3, and T10 (multi-speed fan) and T4, T10 (condensation pump) that have become useless with the adoption of the device of the invention.

The statement according to which the introduction of the hydraulic device of the invention (100) does not alter the structure and operation modes of the heat pump (200) is now confirmed as shown in Fig. 8.

As a matter of fact, Fig. 8 shows that the heat pump (200) can nonnally power a series of direct-expansion exchangers (500), as well as the device of the invention (100) characterised by indirect-expansion operation.

Finally, it must be noted that the device of the invention can be associated both with electric and endothermic heat pumps.

## Claims

1. Device for direct-expansion heat pumps used to power water conditioning systems, the device comprising:
- one primary hydraulic circuit (P)
- one secondary hydraulic circuit (S)
- one circuit (C) for cooling liquid circulation
- one heat exchanger (106) where the transfer of heat between the cooling liquid and the water of the air conditioning system takes place
- one water storage tank (107) provided with secondary circuit (S) to be connected to the circuit of the corresponding water conditioning system;
- one circulation pump (101) that ensures water return between the exchanger (106) and the storage tank (107) by means of a primary circuit (P)
- one expansion vessel (108) associated with the storage tank (107);
- one water recovery unit (111) associated with the storage tank (107) and provided with manometer (110);
- one thermostatic valve (102) with internal and external equalisation inserted in circuit (C) of the cooling liquid that powers the exchanger (106);
- one capillary (103) with by-pass system with two feed check valves (104, 105) inserted in circuit (C) of the cooling liquid that powers the exchanger (106);
- one PD differential pressostat (109) inserted in the primary circuit (P);
- one thermostat TH (112) inserted in the primary circuit (P);
- one general power switch IG
- one switch SMP (113) used to activate the water circulation pump (101), which acts as on-switch of the entire system that incorporates the device of the invention, subject to the approval received from the differential pressostat PD (109), the start relay KP of the water circulation pump (101) and the thermostat TH (112);
wherein the hydraulic device (100) is assisted by an electronic board (300) of the type conventionally used in exchangers of direct-expansion heat pumps with the following modifications:
**(I)** connection of remote control port CNT to relay KT
**(II)** connection CNN with resistive circuit R3 for the simulation of the condensation or evaporation temperature of the cooling liquid
**(II)** connection CNN with two resistive circuits R1 and R2 for the simulation of the air temperature in the room, selected by means of relay KS actuated with the summer/winter selector S1 C/H (114)
**(IV)** connection bridge between contacts T9 and T10 to simulate the permanent "on" status of the float of the condensation collection circuit
**(V)** disconnection of contacts T1, T2, T3, and T10 (multi-speed fan) and T4, T10 (condensation pump);
and wherein the hydraulic device (100) is provided with a remote control unit (400) used to permanently set the "auto" mode as well as a intermediate temperature comprised between the temperature values simulated on the resistive circuits R1 and R2.

2. Device as defined in claim 1, **characterised in that** the primary circuit (P) incorporates two motorised three-way valves (V1, V2) that are selectively actuated with the summer/winter selector S1 C/H (114) in order to invert the water flow inside the exchanger (106), constantly ensuring operation in counter-current flow with respect to the cooling liquid, both in summer and winter mode.

## Patentansprüche

1. Vorrichtung zur Unterstützung von Wärmepumpen mit Direktexpansion zur Versorgung von Klimaanlagen auf Wasserbasis umfasst:
- einen Primär-Hydraulikkreislauf (P)
- einen Sekundär-Hydraulikkreislauf (S)
- einen Kreislauf (C) zur Umwälzung des Kältemittels
- einen Wärmetauscher (106), wenn der Wärmeaustausch zwischen dem Kältemittel und dem Wasser der Klimaanlage erfolgt
- einen Wassersammelbehälter (107), ausgestattet mit einem Sekundärkreislauf (S), der an den Kreislauf der jeweiligen Klimaanlage auf Wasserbasis anzuschließen ist
- eine Umwälzpumpe (101) zur Gewährleistung des Rücklaufs des Wassers zwischen dem Wärmetauscher (106) und dem Sammelbehälter (107) mittels eines Primärkreislaufs (P)
- ein Ausdehnungsgefäß (108), das mit dem Sammelbehälter (107) verbunden ist
- eine Wassemachfüllgruppe (111), die mit dem Behälter (107) verbunden und mit einem Druckmesser (110) ausgestattet ist
- ein thermostatisch gesteuertes Ventil (102) mit internem und extemem Ausgleich, welches in den Kreislauf (C) eingefügt ist, durch welchen das Kältemittel zur Versorgung des Wärmetauschers (106) hindurchströmt
- ein Kapillarrohr (103) mit Bypass-System mit zwei dazugehörigen Rückschlagventilen (104, 105), welche allesamt in den Kreislauf (C) eingefügt sind, durch welchen das Kältemittel zur Versorgung des Wärmetauschers (106) hindurchströmt
- einen Druckwächter PD (109), der in den Primärkreislauf (P) eingefügt ist
- ein Thermostat TH (112), welches in den Primärkreislauf (P) eingefügt ist
- einen Hauptschalter zur Stromversorgung IG
- einen SMP-Schalter (113) zur Betätigung der Wasserumwälzpumpe (101), welcher als Unterbrechungsschalter der gesamten Servoanlage dient, in Abhängigkeit von der Freigabe durch den Differentialdruckwächter PD (109), durch das Relais KP zum Starten der Wasserumwälzpumpe (101) und durch das Thermostat TH (112);
wobei vorgesehen ist, dass die Hydraulikanlage (100) von einer Elektronikkarte (300) des Typs gesteuert wird, wie er normalerweise zusammen mit Wärmetauschern von Wärmepumpen mit direkter Ausdehnung geliefert wird, aber in folgenden Punkten modifiziert ist:
(I) an der Verbindung des Femsteuerungsanschlusses CNT mit einem KT-Relais
(II) an der CNN-Verbindung mit der Widerstandsschaltung R3 zur Simulation der Verflüssigungs- oder Verdampfungstemperatur des Kältemittels
(III) an der CNH-Verbindung mit zwei Widerstandskreisläufen R1 und R2 zur Simulation der Raumlufttemperatur, welche mittels eines KS-Relais gewählt werden, das mit dem Sommer/Winter-Wählschalter S1 C/H (114) betätigt wird
(IV) an der Verbindungsbrücke zwischen den Kontakten T9 und T10 zur Permanenz-Simulation der Modalität "ON" bezüglich des Schwimmers des Kondenswassersammelkreislaufs
(V) an den Verbindungen zwischen den Kontakten T1, T2, T3, T10 (Ventilator mit stufenloser Geschwindigkeitseinstellung) und T4, T10 (Kondenswasserpumpe);
wobei außerdem die Anwendung einer Fembedienungseinheit (400) vorgesehen ist, auf welcher permanent die Modalität "Auto" und eine Temperatur eingestellt ist, die zwischen den in den Widerstandskreisläufen R1 und R2 simulierten Temperaturwerten liegt.

2. Vorrichtung gemäß Anspruch 1, **dadurch gekennzeichnet, dass** der Primärkreislauf (P) mit zwei motorisierten Dreiwegeventilen (V1, V2) ausgestattet ist, die wahlweise mit Hilfe des Sommer-/Winter-Wählschalters 0S1 C/H (114) betätigt werden können, um den Wasserfluss im Innern des Wärmetauschers (106) umzukehren, wodurch sowohl im Sommer als auch im Winterbetrieb ein kontinuierlicher Gegenstrombetrieb bezogen auf den Kältemittelfluss gewährleistet wird.

## Revendications

1. Dispositif à asservir à des pompes de chaleur à expansion directe pour alimenter une installation de climatisation à eau, comprenant :
- un circuit hydraulique primaire (P)
- un circuit hydraulique secondaire (S)
- un circuit (C) pour la circulation du fluide frigorigène
- un échangeur de chaleur (106) où s'effectue l'échange thermique entre le fluide frigorigène et l'eau de la dite installation de climatisation
- un réservoir d'accumulation de l'eau (107) doté d'un circuit secondaire (S) à raccorder au circuit de la relative installation de climatisation à eau
- une pompe de circulation (101) qui assure le recyclage de l'eau entre le dit échangeur (106) et le dit réservoir d'accumulation (107) par le biais d'un circuit primaire (P)
- un vase d'expansion (108) associé au dit réservoir d'accumulation (107)
- un groupe de réintégration de l'eau (111) associé au dit réservoir (107), doté de son manomètre (110)
- un détendeur thermostatique (102) avec égalisation interne et externe inséré dans le circuit (C) parcouru par le fluide frigorigène qui alimente le dit échangeur(106)
- un capillaire (103) avec système de by-pass annexé de deux grilles de refoulement (104, 105), tous insérés dans le circuit (C) parcouru par le fluide frigorigène qui alimente le dit échangeur (106)
- un pressostat différentiel PD (109) inséré dans le circuit primaire (P)
- un thermostat TH (112) inséré dans le circuit primaire (P)
- un interrupteur général d'alimentation électrique IG
- un interrupteur SMP (113) pour l'activation de la dite pompe de circulation de l'eau (101) apte à fonctionner en tant qu'interrupteur d'allumage de toute l'installation assistée par le dispositif en objet, subordonnément au consentement reçu par le dit pressostat différentiel PD (109), par le relais KP de démarrage de la dite pompe de circulation de l'eau (101) et par le dit thermostat TH (112) :
étant prévu que dit dispositif hydraulique (100) soit assisté par une carte électronique (300), du type normalement en dotation aux échangeurs des pompes de chaleur à expansion directe, modifiée en relation :
(I) à la connexion du port de contrôle à distance CNT à un relais KT
(II) à la connexion CNN avec un circuit résistif R3 de simulation de la température de condensation ou de l'évaporation du réfrigérant
(III) à la connexion CNH avec deux circuits résistifs R1 et R2 de simulation des températures de l'air ambiant, sélectionnés via un relais KS activé par le biais du sélecteur été/hiver S1 C/H (114)
(IV) au pontet de connexion entre les contacts T9 et T10 pour simuler en permanence la modalité "ON" avec référence au flotteur du circuit de récolte de la condensation
(V) aux déconnexions des contacts T1, T2, T3, T10 (ventilateur à multi-vitesse) et T4, T10 (pompe pour la condensation) :
étant également prévue l'adoption d'une unité de contrôle à distance (400) sur laquelle on programme de manière permanente la modalité "auto" et une température intermédiaire aux valeurs de températures simulées sur les dits circuits résistifs R1 et R2.

2. Dispositif selon la revendication 1, **caractérisé en ce que** le dit circuit primaire (P) incorpore deux vannes motorisées à trois voies (V1, V2), sélectivement activées via le dit sélecteur été/hiver OS1 C/H (114) aux fins d'invertir le flux de l'eau au sein de l'échangeur (106), en lui assurant constamment un fonctionnement à contre-courant par rapport au fluide frigorigène, tant en modalité estivale qu'en modalité hivernale.
